# FASCICULE DE BREVET EUROPEEN

(11) **EP 0 799 758 B1**
(45) Date de publication et mention de la délivrance du brevet: **21.06.2000**
(21) Numéro de dépôt: 97400713.0
(22) Date de dépôt: 28.03.1997
(51) Int. Cl.: B62D 29/04

(54) **Dispositif de fixation glissante d'une aile plastique**
Einrichtung zur gleitenden Befestigung eines Plastik-Kotflügels
Device for sliding attachment of a plastic mud guard

(30) Priorité: 05.04.1996 FR 9604317
(43) Date de publication de la demande: 08.10.1997
(73) Titulaire: RENAULT, 92109 Boulogne-Billancourt (FR)
(72) Inventeur: Ginestet, Thierry, 78180 Montigny le Bretonneux (FR)

(56) Documents cités:
- DE-A- 3 809 385
- FR-A- 2 720 794
- US-A- 4 529 244
- US-A- 5 098 765

## Description

L'invention concerne un dispositif de fixation d'un élément plastique de carrosserie, notamment une aile plastique de véhicule automobile sur un support métallique.

L'invention concerne plus particulièrement un dispositif de fixation d'un élément plastique de carrosserie sur un support métallique dont le coefficient de dilatation est inférieur à celui dudit élément plastique.

Certains modèles de véhicules automobiles sont équipés d'ailes en matière plastique. Les coefficients de dilatation étant différents entre la matière plastique constituant les ailes et l'acier constituant la structure, on constate, lors de l'application d'un traitement de surface nécessitant une augmentation de température, par exemple lors de la cuisson d'une peinture, un déplacement important de l'aile par rapport à la structure puis son retour, lors du refroidissement, en position initiale. Les dispositifs de fixation utilisés avec des ailes en acier ne sont donc pas utilisables tels quels pour la fixation des ailes en matière plastique, car ils imposeraient au plastique des contraintes rédhibitoires.

La publication FR-A-2720794 décrit un dispositif de retenue d'un élément plastique de carrosserie sur un support métallique dans lequel une agrafe de fixation dudit élément plastique sur le support dont le coefficient de dilatation est inférieur à celui de l'élément plastique, est constituée notamment par une base de fixation, la base de fixation portant perpendiculairement des languettes d'appui sur l'élément plastique, lesdites languettes étant solidaires d'une entretoise munie d'un trou de passage d'une vis de fixation. Un tel dispositif ne se justifie que lorsque la fixation s'effectue sur une partie de l'aile présentant une configuration géométrique très particulière. De plus, les variations de température provoquent un retrait supplémentaire du plastique en deçà des dimensions initiales de l'aile, retrait qui n'intervient qu'après le refroidissement, alors que l'aile est à nouveau bloquée longitudinalement sur l'agrafe. Ce retrait, qui n'est pas pris en compte par le dispositif de retenue mentionné ci-dessus, provoque, dans le cas d'une aile avant, un écartement de l'extrémité arrière de ladite aile par rapport à l'extrémité avant de la porte avant, entraînant une augmentation disgracieuse du jeu d'aspect existant entre l'aile et la porte.

Le dispositif selon l'invention vise à palier cet inconvénient. A cet effet, l'invention concerne un dispositif de fixation d'un élément plastique de carrosserie sur un support métallique dont le coefficient de dilatation est inférieur à celui dudit élément plastique , dispositif du type comportant un élément de fixation venant se fixer sur le support métallique à travers une lumière longitudinale de l'élément plastique, caractérisé en ce que ledit élément de fixation est monté en translation longitudinale dans ladite lumière et coopère avec des moyens élastiques procurant le rappel de l'élément de fixation dans une position d'équilibre au sein de la lumière. Le dispositif de fixation ainsi défini permet de prendre en compte les déformations éventuelles de l'élément plastique tout en procurant un positionnement précis dudit élément plastique sur le support métallique.

Selon une autre caractéristique de l'invention, la position d'équilibre est telle que le débattement de l'élément de fixation dans la lumière de l'élément plastique est réparti, autour de la position d'équilibre:
en un premier débattement défini par l'espace compris entre une première extrémité de la lumière et l'extrémité de l'élément de fixation en regard, débattement correspondant à la dilatation de l'élément plastique et,
un second débattement défini par l'espace compris entre la seconde extrémité de la lumière et l'extrémité de l'élément de fixation en regard, débattement correspondant au retrait du même élément plastique. Cette caractéristique permet de prendre en compte les variations dimensionnelles de l'élément plastique résultant de sa dilatation comme celles résultant de son retrait.

Selon une autre caractéristique de l'invention, le premier débattement est différent du second débattement. Cette caractéristique permet de prendre en compte le fait que les variations résultant de la dilatation et celles résultant du retrait sont d'amplitude différente.

Selon une autre caractéristique de l'invention, l'élément de fixation comporte des moyens de détrompage pour son positionnement sur l'élément plastique. Cette caractéristique permet d'éviter une inversion, au moment du montage, de l'élément de fixation, permutation qui entraînerait une permutation entre les deux débattements d'amplitude différente.

Selon une autre caractéristique de l'invention, l'élément de fixation est constitué d'une plaquette comportant sur sa face inférieure un patin longitudinal de largeur inférieure et coulissant à l'intérieur de la lumière, ladite plaquette étant percée, perpendiculairement à son plan, par un trou de fixation.

Selon une autre caractéristique de l'invention, les moyens élastiques sont constitués par une première et une seconde lames élastiques fixées sur le patin, la première lame s'étendant depuis la partie arrière du patin jusqu'à la première extrémité de la lumière, définissant ainsi le premier débattement, la seconde lame s'étendant depuis la partie avant du patin jusqu'à la seconde extrémité de la lumière, définissant ainsi le second débattement.

Selon une autre caractéristique de l'invention, les moyens de détrompage comprennent une première languette émergeant latéralement d'un côté du patin, écartée de la surface inférieure de la plaquette d'une distance légèrement supérieure à l'épaisseur du bord correspondant de la lumière, bord qui comporte une découpe d'introduction de ladite languette.

Selon une autre caractéristique de l'invention, les moyens de détrompage comprennent deux languettes supplémentaires disposées du côté opposé à celui portant la première languette, écartés de la surface inférieure de la plaquette d'une distance légèrement supérieure à l'épaisseur du bord correspondant de la lumière. Ces languettes permettent de solidariser le dispositif de fixation sur l'aile plastique à fixer, et ce, préalablement à son montage sur le support métallique, ce qui facilite les manipulations. L'élément de fixation ainsi défini est particulièrement simple et peu coûteux à fabriquer. En particulier, il peut être réalisé en matière plastique et être moulé en une seule pièce avec les lames élastiques.

D'autres caractéristiques et avantages apparaîtront à la lecture de la description d'un exemple de dispositif selon l'invention, en référence aux dessins dans lesquels :
- la figure 1 est une vue en perspective éclatée du montage de l'aile sur le support au moyen du dispositif de fixation selon l'invention,
- la figure 2 est une vue en plan du dispositif de fixation selon l'invention,
- la figure 3 est une vue en coupe selon la ligne III-III de la figure 2,
- la figure 4 est une vue en perspective de l'élément de fixation en position retournée.

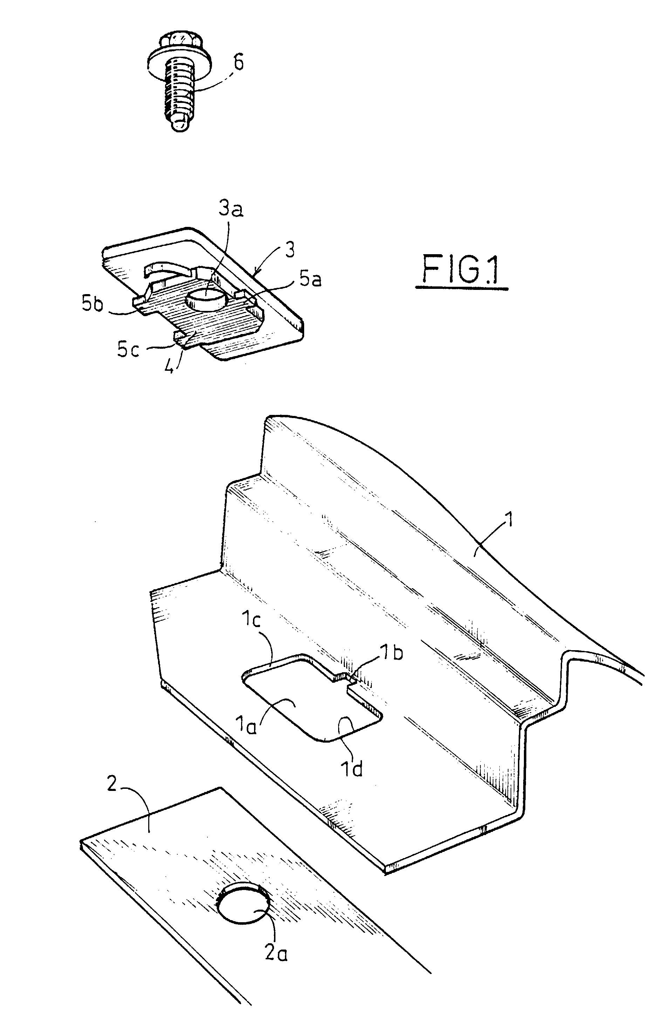

La figure 1 schématise le montage d'une aile plastique 1 sur un support métallique 2 à l'aide du dispositif de fixation selon l'invention. Ce dispositif comporte un élément de fixation venant se fixer sur le support métallique 2 à travers une lumière longitudinale la pratiquée dans l'aile plastique 1. Dans la variante représentée sur les figures, l'élément de fixation est constitué d'une plaquette 3 comportant sur sa face inférieure un patin longitudinal 4 de largeur inférieure et coulissant à l'intérieur de la lumière longitudinale 1a, ladite plaquette 3 étant percée, perpendiculairement à son plan, par un trou de fixation 3a débouchant à travers le patin longitudinal 4. La lumière longitudinale la présente une forme rectangulaire de largeur légèrement supérieure à celle du patin 4 mais de longueur supérieure. La plaquette 3 comporte une languette 5a émergeant latéralement d'un côté du patin 4, écartée de la surface inférieure 3b de la plaquette 3 d'une distance légèrement supérieure à l'épaisseur du bord correspondant de la lumière la, bord qui comporte une découpe 1b d'introduction de ladite languette 5a.

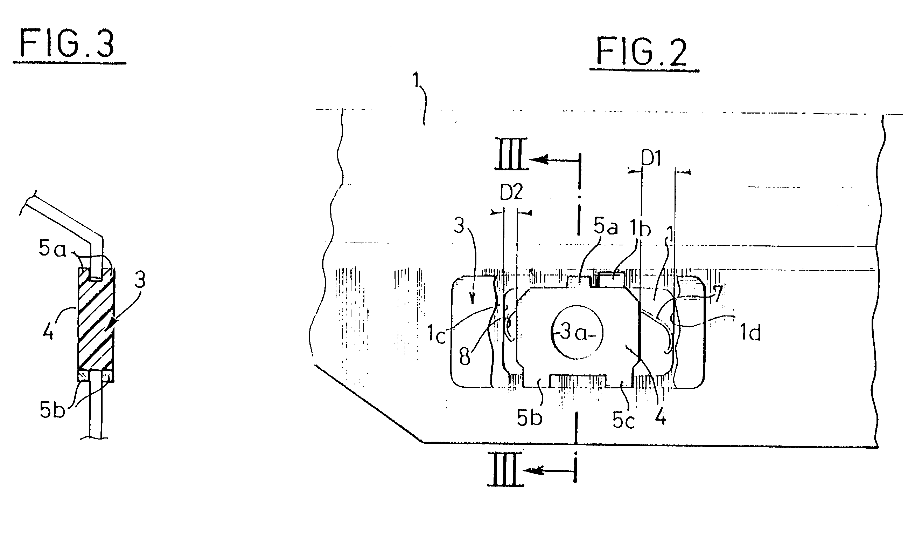

La plaquette 3 comporte deux languettes supplémentaires 5b,5c disposées du côté du patin 4 opposé à celui portant la première languette 5a, écartées de la surface inférieure 3b de la plaquette 3 d'une distance légèrement supérieure à l'épaisseur du bord correspondant de la lumière la. Le montage s'effectue de la manière suivante : la plaquette 3 est enfilée, par son côté comportant deux languettes 5b,5c, dans la lumière la, du côté opposé à la découpe 1b, les deux languettes 5b,5c étant glissées sous la surface de l'aile 1. Le montage se poursuit en introduisant la languette 5a dans la découpe 1b puis en faisant glisser longitudinalement la plaquette 3 de manière à amener la languette 5a en dessous de la surface inférieure 3b dans une position décalée par rapport à la découpe 1b, comme il est représenté en coupe sur la figure 3. La plaquette 3 est alors maintenue sur l'aile qui se trouve bloquée entre les languettes 5a,5b,5c et la surface inférieure 3b de ladite plaquette. On vient ensuite fixer l'aile sur le support 2 à l'aide d'une vis 6 qui traverse le trou 3a pratiqué au travers la plaquette 3 et son patin 4, pour venir se visser dans un trou 2a du support métallique 2. L'aile 1 ainsi positionnée est maintenue perpendiculairement au plan de la plaquette 3 tout en pouvant glisser selon sa dimension longitudinale.

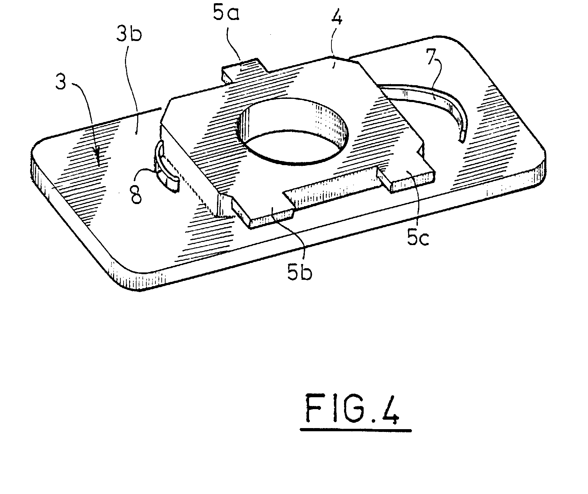

De manière à s'assurer que l'aile 1 soit correctement positionnée par rapport au support métallique 2, et donc par rapport au reste du véhicule, il est nécessaire que le positionnement de la plaquette 3 soit déterminé par rapport à ladite aile 1. De plus, de manière à autoriser les dilatations et retraits intervenant à la suite d'un traitement thermique subi par la caisse du véhicule, il est nécessaire que ce positionnement soit réalisé de manière élastique de part et d'autre d'une position d'équilibre. A cet effet, la plaquette 3 comporte une première 7 et une seconde 8 lames élastiques, par exemple obtenues de moulage avec le patin 4 et la plaquette 3, comme il est représenté sur la figure 4. La première lame 7 prend naissance à une extrémité du patin 4 en regard de la première extrémité 1d de la lumière la et s'étend jusqu'à ladite première extrémité 1d. Cette première lame 7 définit ainsi un premier débattement D1. La seconde lame 8 prend naissance à l'autre extrémité du patin 4 pour s'étendre jusqu'à la seconde extrémité 1c de la lumière 1a et définit ainsi un second débattement D2.

Lors du montage de l'aile sur le support métallique 2, on effectue le réglage des jeux entre l'aile 1, le capot et la porte (non représentés sur les figures). La plaquette 3 étant maintenue dans sa position d'équilibre par rapport à l'aile entre les lames élastiques 7,8, l'ajustement est réalisé grâce au trou 3a, percé dans la plaquette 3 avec un diamètre supérieur à celui de la vis 6. Les lames 7 et 8 permettent d'assurer le respect des débattements D1 et D2 de part et d'autre de la position d'équilibre de la plaquette 3 à l'intérieur de l'évidement la, comme il est représenté sur la figure 2.

Lors d'une élévation importante de température, l'aile 1 va se dilater, principalement selon sa dimension longitudinale. L'aile représentée sur la figure 2 correspond à une aile avant de véhicule. A ce titre, elle est également fixée au niveau de la porte avant qui n'est pas représentée sur la figure 2 mais dont l'emplacement correspond à la droite de l'aile 1. Ainsi, la dilatation va se traduire par une translation vers la gauche, de l'aile 1 et par suite de la lumière la, par rapport au support métallique 2 et donc à la plaquette 3 qui lui est fixée. La force exercée par la dilatation étant supérieure à celle exercée par la lame 7, l'extrémité 1d de la lumière la va se rapprocher de l'extrémité en regard du patin 4. Le débattement D1 est évidemment choisi en fonction de la dilatation prévue. Lors du refroidissement, l'aile 1 et avec elle, sa lumière la vont petit à petit se déplacer vers la droite pour reprendre leur position de départ représentée sur la figure 2. Après refroidissement, le plastique constituant l'aile 1 subit un retrait supplémentaire au-delà de sa position de départ. L'extrémité lc de la lumière la va donc se déplacer vers la droite de la figure 2, en comprimant la lame 8. Le débattement D2 est choisi de manière à permettre le retrait de l'aile 1. Généralement le débattement D1 est supérieur au débattement D2. Les forces de rappel élastique des lames 7 et 8 sont déterminées de façon à être suffisantes pour assurer le positionnement de la plaquette 3 au sein de la lumière la de manière à maintenir les débattements D1 et D2 choisis tout en ne s'opposant pas à la libre dilatation et au libre retrait de l'aile 1.

La disposition asymétrique des languettes 5a, d'un côté du patin 4 de la plaquette 3 et 5b,5c de l'autre côté, permet de s'assurer que ladite plaquette 3 n'est pas montée à l'envers, ce qui aurait pour conséquence d'inverser les deux débattements Dl et D2, qui, comme on l'a vu ci-dessus, ne sont pas forcément égaux.

Bien entendu, l'invention n'est nullement limitée au mode de réalisation décrit et illustré qui n'a été donné qu'à titre d'exemple. En particulier, tout élément de fixation monté à translation à l'intérieur d'une lumière pratiquée dans l'aile et maintenu en place au sein de ladite lumière par des moyens élastiques solidaires de l'élément de fixation ou de la lumière ne sortirait pas du cadre de l'invention définie par les revendications.

## Revendications

1. Dispositif de fixation d'un élément plastique (1) de carrosserie sur un support métallique (2) dont le coefficient de dilatation est inférieur à celui dudit élément plastique (1), dispositif du type comportant un élément de fixation (3,4) venant se fixer sur le support métallique (2) à travers une lumière longitudinale (1a) de l'élément plastique (1), ledit élément de fixation (3,4) étant monté en translation longitudinale dans ladite lumière (1a) et coopèrant avec des moyens élastiques (7,8), caractérisé en ce que lesdits moyens élastiques procurent le rappel de l'élément de fixation (3,4) dans une position d'équilibre telle que le débattement de l'élément de fixation (3,4) dans la lumière (1a) de l'élément plastique (1) est réparti, autour de la position d'équilibre:
en un premier débattement (D1) défini par l'espace compris entre une première extrémité (1d) de la lumière (1a) et l'extrémité de l'élément de fixation (3,4) en regard, débattement correspondant à la dilatation de l'élément plastique (1) et,
un second débattement (D2) défini par l'espace compris entre la seconde extrémité (1c) de la lumière (1a) et l'extrémité de l'élément de fixation (3,4) en regard, débattement correspondant au retrait du même élément plastique (1).

2. Dispositif de fixation selon la revendication 1, caractérisé en ce que le premier (D1) débattement est différent du second débattement (D2).

3. Dispositif de fixation selon l'une quelconque des revendications 1 à 2, caractérisé en ce que l'élément de fixation (3,4) comporte des moyens de détrompage (5a,5b,5c) pour son positionnement sur l'élément plastique (1).

4. Dispositif de fixation selon la revendication 3, caractérisé en ce que l'élément de fixation est constitué d'une plaquette (3) comportant sur sa face inférieure (3b) un patin longitudinal (4) de largeur inférieure et coulissant à l'intérieur de la lumière (1a), ladite plaquette (3) étant percée, perpendiculairement à son plan, par un trou de fixation (3a).

5. Dispositif de fixation selon la revendication précédente, caractérisé en ce que les moyens élastiques sont constitués par une première (7) et une seconde (8) lames élastiques fixées sur le patin (4), la première lame (7) s'étendant depuis la partie arrière du patin (4) jusqu'à la première extrémité (1d) de la lumière (1a), définissant ainsi le premier débattement (D1), la seconde lame (8) s'étendant depuis la partie avant du patin (4) jusqu'à la seconde extrémité (1c) de la lumière (1a), définissant ainsi le second débattement (D2).

6. Dispositif de fixation selon l'une quelconque des revendications 4 ou 5, caractérisé en ce que les moyens de détrompage comprennent une première languette (5a) émergeant latéralement d'un côté du patin (4), écartée de la surface inférieure (3b) de la plaquette (3) d'une distance légèrement supérieure à l'épaisseur du bord correspondant de la lumière (1a), bord qui comporte une découpe (1b) d'introduction de ladite languette (5a).

7. Dispositif de fixation selon la revendication précédente, caractérisé en ce que les moyens de détrompage comprennent deux languettes supplémentaires (5b,5c) disposés du côté opposé à celui portant la première languette (5a), écartées de la surface inférieure (3b) de la plaquette (3) d'une distance légèrement supérieure à l'épaisseur du bord correspondant de la lumière (1a).

## Patentansprüche

1. Einrichtung zur Befestigung eines Plastik-Karosserieelementes (1) auf einem metallischen Träger (2), dessen Ausdehnungskoeffizient niedriger als derjenige des Plastikelementes (1) ist, wobei die Einrichtung ein Befestigungselement (3, 4) aufweist, das auf dem metallischen Träger (2) durch einen longitudinalen Durchbruch (1a) des Plastikelementes hindurch befestigt wird, wobei das Befestigungselement (3, 4) in longitudinaler Richtung in dem Durchbruch (1a) montiert ist und mit elastischen Einrichtungen (7, 8) zusammenarbeitet, dadurch gekennzeichnet, dass die elastischen Einrichtungen die Rückwärtsbewegung des Befestigungselmentes (3, 4) in eine Gleichgewichtslage sichern, derart, dass der Federweg des Befestigungselementes (3, 4) in dem Durchbruch (1a) des Plastikelementes (1) um die Gleichgewichtslage aufgeteilt ist:
in einen ersten Federweg (D1), der durch den Raum zwischen einem ersten Rand (1d) des Durchbruchs (1a) und dem gegenüber liegenden Rand des Befestigungselementes (3, 4) definiert ist, wobei dieser Federweg der Ausdehnung des Plastikelementes (1) entspricht, und
in einen zweiten Federweg (D2), der durch den Raum zwischen dem zweiten Rand (1c) des Durchbruches (1a) und dem gegenüberliegenden Rand des Befestigungselementes (3, 4) definiert ist, wobei dieser Federweg der Rückwärtsbewegung des gleichen Plastikelementes (1) entspricht.

2. Befestigungseinrichtung nach Anspruch 1, dadurch gekennzeichnet, dass der erste Federweg (D1) unterschiedlich zu dem zweiten Federweg (D2) ist.

3. Befestigungseinrichtung nach einem der Ansprüche 1 bis 2, dadurch gekennzeichnet, dass das Befestigungselement (3, 4) Zuordnungseinrichtungen (5a, 5b, 5c) zur passgenauen Positionierung auf dem Plastikelement (1) aufweist.

4. Befestigungseinrichtung nach Anspruch 3, dadurch gekennzeichnet, dass das Befestigungselement durch eine Platte (3) gebildet ist, die auf ihrer unteren Fläche (3b) eine longitudinale Kufe (4) mit einer geringeren Breite aufweist, die in dem Inneren des Durchbruches (1a) gleitet, wobei die Platte (3) senkrecht zu ihrer Fläche von einem Befestigungsloch (3a) durchdrungen ist.

5. Befestigungseinrichtung nach einem der vorhergehenden Ansprüche, dadurch gekennzeichnet, dass die elastischen Einrichtungen durch eine erste und eine zweite elastische Lamelle (7, 8) gebildet sind, die mit der Kufe (4) befestigt sind, wobei sich die erste Lamelle (7) von dem hinteren Bereich der Kufe (4) bis zu einem ersten Rand (1d) des Durchbruchs (1a) erstreckt und so den ersten Federweg (D1) definiert, und die zweite Lamelle sich von dem vorderen Bereich der Kufe (4) bis zu dem zweiten Rand (1c) des Durchbruches (1a) erstreckt und so den zweiten Federweg (D2) definiert.

6. Befestigungseinrichtung nach einem der Ansprüche 4 oder 5, dadurch gekennzeichnet, dass die Zuordnungseinrichtungen eine erste Zunge (5a) aufweisen, die sich seitlich auf einer Seite der Kufe (4) erstreckt und in einem Abstand von der unteren Oberfläche (3b) der Platte (3) gelegen ist, der geringfügig größer als die Dicke des korrespondierenden Randes des Durchbruches (1a) ist, wobei der Rand einen Einführungsausschnitt (1b) für die Zunge (5a) aufweist.

7. Befestigungseinrichtung nach dem vorhergehenden Anspruch, dadurch gekennzeichnet, dass die Zuordnungseinrichtungen zwei zusätzliche Zungen (5d, 5c) aufweisen, die auf der die erste Zunge (5a) tragenden gegenüberliegenden Seite angeordnet sind und in einem Abstand zu der unteren Oberfläche (3b) der Platte (3) gelegen sind, der geringfügig größer als die Dicke des korrespondierenden Randes des Durchbruches (1a) ist.

## Claims

1. A device for fastening a plastic bodywork member (1) on a metal support (2) whose coefficient of expansion is lower than that of the plastic member (1), which device is of the type comprising a fastening member (3, 4) which is fastened on the metal support (2) via a longitudinal slot (1a) of the plastic member (1), this fastening member (3, 4) being mounted to move in longitudinal translation in the slot (1a) and cooperating with elastic means (7, 8), characterised in that these elastic means recall the fastening member (3, 4) into a balanced position such that the clearance of the fastening member (3, 4) in the slot (1a) of the plastic member (1) is divided, around the balanced position:
into a first clearance (D1) defined by the space between a first end (1d) of the slot (1a) and the facing end of the fastening member (3, 4), which clearance corresponds to the expansion of the plastic member (1) and,
a second clearance (D2) defined by the space between the second end (1c) of the slot (1a) and the facing end of the fastening member (3, 4), which clearance corresponds to the contraction of this plastic member (1).

2. A fastening device as claimed in claim 1, characterised in that the first clearance (D1) is different from the second clearance (D2).

3. A fastening device as claimed in any one of claims 1 and 2, characterised in that the fastening member (3, 4) comprises correction means (5a, 5b, 5c) for its positioning on the plastic member (1).

4. A fastening device as claimed in claim 3, characterised in that the fastening member is formed by a plate (3) comprising, on its lower surface (3b), a longitudinal block (4) of smaller width sliding within the slot (1a), a fastening hole (3a) being drilled into this plate (3), perpendicular to its plane.

5. A fastening device as claimed in the preceding claim, characterised in that the elastic means are formed by a first and a second elastic blade (7, 8) secured to the block (4), the first blade (7) extending from the rear portion of the block (4) to the first end (1d) of the slot (1a), thereby defining the first clearance (D1), and the second blade (8) extending from the front portion of the block (4) to the second end (1c) of the slot (1a), thereby defining the second clearance (D2).

6. A fastening device as claimed in any one of claims 4 or 5, characterised in that the correction means comprise a first tongue (5a) emerging laterally from one side of the block (4), spaced from the lower surface (3b) of the plate (3) by a distance slightly greater than the thickness of the corresponding edge of the slot (1a), which edge comprises a cut-out (1b) for the introduction of this tongue (5a).

7. A fastening device as claimed in the preceding claim, characterised in that the correction means comprise two further tongues (5b, 5c) disposed on the side opposite to that bearing the first tongue (5a), spaced from the lower surface (3b) of the plate (3) by a distance slightly greater than the thickness of the corresponding edge of the slot (1a).
